# EUROPEAN PATENT APPLICATION

(11) **EP 1 533 685 A1**
(43) Date of publication of application: **25.05.2005**
(21) Application number: 03023977.6
(22) Date of filing: 22.10.2003
(51) Int. Cl.: G06F 3/033

(54) **Handheld device for navigating and displaying data**

(71) Applicant: Sony International (Europe) GmbH, 10785 Berlin (DE)
(72) Inventor: Micheltisch, Georg, Sony International (Europe), 70327 Stuttgart (DE); Rapp, Stefan, Sony International (Europe), 70327 Stuttgart (DE)
(74) Representative: Hössle Kudlek & Partner

(57) **Abstract**

A handheld device (1) for navigating through and displaying data comprises projection means (10) for projecting a selected portion (4) of a larger data set (3) on a projection surface (2) and data navigation means which select in response to the orientation, position and/or movement of the device (1) the data to be displayed by the projection means (10). The device (1) can be intuitively used to pan through a large data set and to visualise an area of interest.

## Description

The present invention relates to a device which is used for navigating through and displaying data.

The general task of navigating in large information spaces or data sets has been addressed for various application scenarios and hardware configurations. A common feature of almost all known approaches is the notion of having a fixed display medium and dedicated input devices, e.g. a mouse, a pen, etc., that the user operates in order to change the viewport on the information space or data set. Having selected the new viewport, the information space is correspondingly rendered onto the screen.

The most commonly used system for navigating through data sets is a computer screen or monitor combined with a mouse as input device. By moving the mouse in different directions, the user can pan the available viewport around the data set - which is e.g. visualised as a map - until the area the user is interested in is located. With every motion of the mouse, the viewport within the data set is changed and the data shown on the display or monitor are updated correspondingly. This panning operation is the basis operation for navigating in data sets. Often, additional navigation commands can be entered in order to e.g. zoom into the selected area of interest or to change the visualisation of the displayed data.

The classical input devices as mentioned above suffer sometimes from the drawback that an operation or manipulation of the input device cannot be intuitively linked to the navigation operation initiated or triggered by this operation. Often, a user first has to learn several specific navigation procedures in order to change the visualisation of the data as desired.

It is therefore an object of the present invention to provide a new method and a system which allows to navigate through and display data in an effective and convenient way.

In accordance with the present invention, there is provided a device for navigating through and displaying data which comprises projection means for projecting a selected portion of a larger data set on a projection surface and data navigation means which select in response to the orientation, position and/or movement of the device the data to be displayed by the projection means.

The present invention is based on a novel idea where the display device and the interaction device are the same. In accordance with the present invention, the content to be displayed is projected onto an arbitrary surface by a handheld device that - at the same time - also functions as the input device. As a result, the panning motion triggered by the natural hand gesture of turning the projection device into the direction of interest conforms to the natural gesture of turning the head in order to change the viewport. Thus, the device according to the present invention can be intuitively used to pan through a large data set and to visualise the area or the areas of interest.

As mentioned above, a specific data portion which has to be displayed on the projection surface can be selected by changing the orientation or position of the device. In order to sense the actual orientation/position or changes in the orientation/position, the data navigation means can comprise an accelerometer and/or a gyroscope and/or a magnetic field sensor.

Another possibility to detect orientation or position changes of the device is to use a camera which repeatedly records pictures close to the projection area and to detect a motion of the device by a change in the pictures recorded by the camera. This image based motion vector detection requires the device to be able to separate between the image projected on the projection surface and the physical background. In order to achieve this, pictures are preferably taken which cover at least an area surrounding the projected data on the projection surface and only the part of the pictures which is not influenced by the projected data is analysed in order to detect a change of the position and/or orientation of the device. Alternatively, the device can record an image on the side, above or below the projected image where no interference between projection and background is to be expected.

In accordance with the present invention, a motion of the projection device is transferred into a change of the viewport of the data to be visualised. Since the device is usually held in the hand of a user, it has to be taken into account that the user's hand will always slightly tremble which consequently results in small variations of the position and/or orientation of the device. Since these small variations are independent from the user's wish to display a certain portion of the data set, these variations are - according to a first alternative - not interpreted to mean a change of the viewport but are compensated instead. In this first solution, the projected image is shifted into the opposite direction of the unintended hand motion in order to obtain a stable image on the projection surface. Once however a predetermined threshold of motion is overcome, the motion vector captured from the hand gesture is used to move the viewport into the same direction as the movement of the device indicates.

The above-mentioned solution of compensating small variations in the position of the device allows to produce a very stable picture on the projection surface. On the other hand, the compensation mechanism has to react extremely fast in order to achieve the desired task.

It is therefore a second alternative provided in which all movements of the device are interpreted to change the related viewport of the data to be visualised. No compensation effort is made in order to stabilise the projected picture. As a result, the border area of the visualised data will constantly change even if the user intends to keep the viewport fixed. Since the permanent change of the border area displayed on the projection surface would probably distract people watching the visualised data, this "trembling" effect is alleviated by applying a filter over a small part of the border area which "fades out" the projected image in that border area. In this solution, although the viewport of the data constantly changes, these changes are only hardly recognised by persons watching the projection surface.

As mentioned above, the main function of the present device is to transfer a motion of the device into a change of the viewport of the data to be visualised. In addition to this basis function, the distance between the device and the projection surface can be used to adjust the size of the viewport. Moving the device closer to the display surface allows the user to zoom into the data space, moving away from the surface has the opposite effect. Nevertheless, the actual size of the projected display will - within certain limits of the focus abilities of the projection means - not change as a result of this motion. Once however the limit of the ability to focus the data on a projection surface is reached, the device reverts to the standard behaviour of projection devices which means that the display area shrinks as the device comes closer to the display surface and grows as the device is moved away.

In a further development of the device according to the present invention, the motion of the device could also be used to generate optical information which is displayed on the projection surface. In a specific write mode, the hand movements of the user holding the device are tracked by the data navigation means and used as samples to re-construct the gestures of the user. The resulting strokes are then painted on the projection surface which allows the user to hand-write messages on the projection surface. According to a preferred embodiment, the backdrop of the data projected by the device on the projection surface remains unchanged while the user uses the device to write messages onto the projection surface.

The present invention thus provides a completely new solution for navigating through data sets and displaying at least a part of these data. Furthermore, the navigation commands follow the motion of the user's hand which allows a very convenient and intuitive manipulation and actuation of the device.

The present invention also refers to a method for navigating through and displaying data wherein a selected portion of a larger data set is projected onto a projection surface by using a projection device and wherein the data to be projected onto the projection surface are selected in response to the orientation, position and/or movement of the device.

In the following, the present invention is explained in more detail by means of a preferred embodiment shown in the enclosed drawings in which:
- Fig. 1: shows an embodiment of a device in accordance with the present invention for navigating through and displaying data;
- Fig. 2: is a schematic view showing the concept underlying the present invention;
- Fig. 3: is a block diagram showing the elements of a preferred embodiment of a device in accordance with the present invention,
- Fig. 4: is a further schematic view showing an additional interaction possibility for zooming into the displayed data;
- Fig. 5: shows a first alternative wherein small motions of the device are compensated for obtaining a stabilised picture;
- Fig. 6: shows a second alternative for reducing the effect of unintended movements of the device;
- Fig. 7: schematically shows the visualisation of data in the case of the second alternative; and
- Fig. 8: shows the device in the write mode.

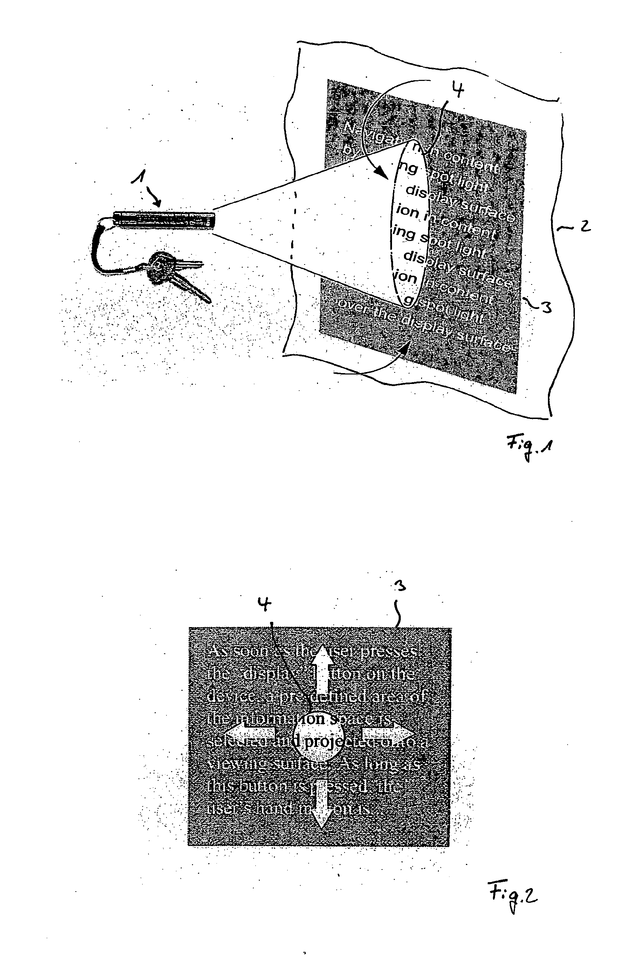

Figs. 1 and 2 show the principal concept underlying the present invention. The projection device 1 used to navigate through and display data is intended to be held by a user's hand. It has the form of a small flash light or a laser pointer which - as shown in Fig. 1 - could be used as a key fob.

The main component of the projection device 1 is a projection unit which is used to project data on a projection surface 2. Said projection surface 2 could be any surface suitable to project optical information thereon, e.g. a wall of a room or a screen.

The concept of the projection device 1 according to the present invention can be compared to a spot light which is directed onto a wall within a dark room. As shown in Figs. 1 and 2, the data set to be visualised by the device 1 defines a large information space 3 which covers nearly the whole projection surface 2 or can be even larger than the projection surface 2. Nevertheless, this information space 3 is not shown as a whole. If the user presses a (not shown) display button on the device 1, a pre-defined area 4 of the information space 3 is selected and projected onto the projection surface 2 while the remaining part of the information space 3 and therefore the remaining part of the projection surface remains dark.

In order to change the selected area 4 and the data to be visualised, the projection device 1 has to be moved in order to steer the "spot light" in another direction. As indicated by the arrows in Fig. 2, the user can in this way pan over the whole information space 3 in order to change the viewport. As a result of turning the device into a specific direction, not only the contents of the data which are visualised change but also the position on the projection surface 2 on which these data appear will change. As a result, the panning motion triggered by the natural hand gesture of turning the device 1 into the direction of interest conforms to the natural gesture of turning the head in order to change the viewport.

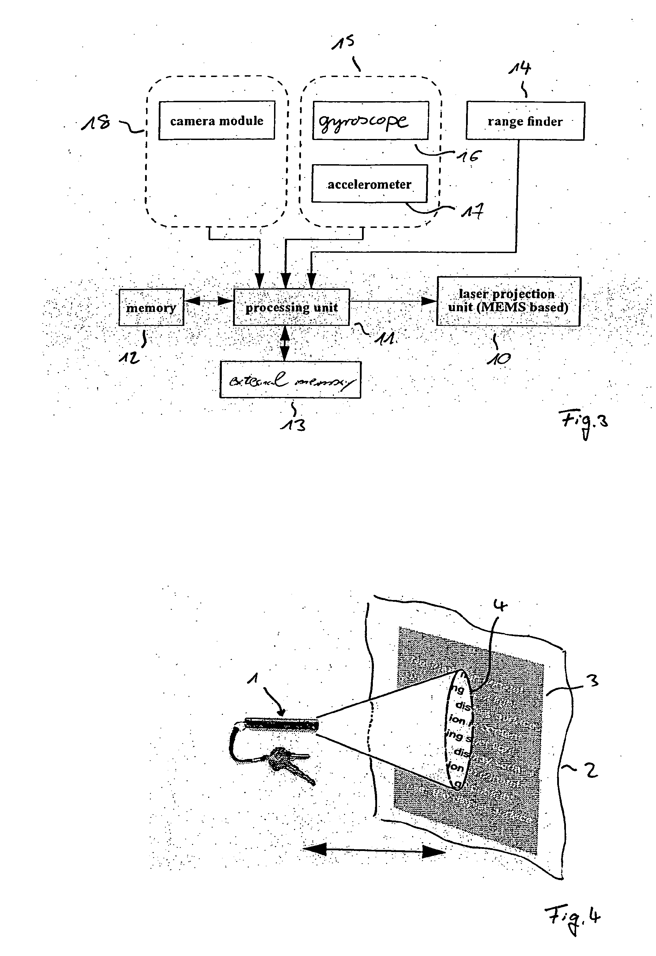

From the explanations above it follows that an essential feature of the device according to the present invention is that the device is able to recognise a change in the orientation and/or position in order to transfer these changes into a change of the viewport. Two possibilities to realise this motion detection will be explained afterwards with reference to the block diagram of Fig. 3.

In a first alternative of the present invention, the device 1 includes a motion detector unit 15 which comprises a gyroscope 16 and an accelerometer 17. The gyroscope 16 and the accelerometer 17 in combination are able to sense every motion the device 1 does undergo. Instead of the gyroscope, a magnetic field sensor can be used in combination with the accelerometer 17. Generally, for measuring the tilt of the device 1, an accelerometer can be used that measures the static earth gravity besides the dynamic forces induced through movements. Regarding a projection to a wall, with 2-way accelerometers it is thus possible to measure the up-down direction and the rotation direction of the device 1. If also the floor or the ceiling are to be used for a projection or if a 90° rotation of the device 1 is to be detected, a third acceleration axis orthogonal to the other two is necessary. Since left-right movements are not measured appropriately by accelerometers, a gyroscope (for dynamic changes) or a magnetic field sensor (measuring the static earth magnetic field) has to be used additionally.

A second alternative for sensing a movement of the device 1 uses an image based motion vector extraction mechanism. In this solution, the device 1 comprises a camera module 18 which contains a camera that repeatedly takes pictures from the area of the projection surface the device 1 is directed to. By analysing the pictures, in particular by analysing the differences between two following pictures, the camera module 18 is again able to recognise a change in the position or orientation of the device 1. This second solution requires that the camera module 18 is able to separate between the projected image and the image of the physical background, i.e. the projection surface 2. This can be achieved by adapting the camera module 18 in a way that the camera occludes the portion of the image which is "damaged" by the projected data and only reads and analyses the surrounding areas.

In both solutions, the motion detector unit 15 or the camera module 18 senses a change in the position and/or orientation of the device 1 and forwards this information to a processing unit 11 which processing unit 11 forms together with the camera module 18 or the motion detector unit 15 the core of the above-mentioned data navigation means. The processing unit 11 then selects the corresponding data which are forwarded to a projection unit 10 for projecting these data onto the projection surface 2. The projection unit 10 could be a MEMS (Micro Electro-Mechanical System) based laser projection unit or another projection device suitable to project the data onto a surface. The whole information space, i.e. the larger data set from which the actual projected data is selected, could be either stored locally in a memory 12 contained within the device 1. Alternatively, these data could also be stored within an external memory 13 whereas the processing unit 12 downloads the required data by a wireless communication link, e.g. via Bluetooth.

Finally, the device 1 also comprises a range finder module 14, which is used to measure the distance between the projection device and the projection surface 2. The information obtained from this module 14 can be used to further manipulate the visualisation of the data as will be explained now with reference to Fig. 4.

As mentioned before, the main function of the projection device 1 according to the present invention is to pan over a large data set by steering at different positions on the projection surface 2, i.e. by turning the device 1 and/or moving it parallel to the projection surface 2. In addition to this basis function, the device 1 can also be manipulated in order to adjust the size of the viewport. This is achieved by changing the distance between the device 1 and the projection surface 2. Moving the device 1 closer to the projection surface 2 prompts the device to zoom into the data space, moving away from the surface 2 results in the opposite effect. It is important to note that the actual size of the projected display, i.e. the size of the area covered by the visualised data, will not change as a result of this motion. This zooming operation only changes the detail level with which the data are visualised on the projection surface 2. If - for example - the data are visualised in the form of a map, zooming into the viewport could be used to display details of the selected area of interest, e.g. to show street names and so on.

The maximum amount of movement that can be used for zooming in this way depends on the complexity of the data space on the one hand and the ability of the projection unit 10 to focus onto the projection surface 2 on the other hand. As soon as one of these limits is reached, the device 1 reverts to its standard behaviour which means that the display area shrinks as the device 1 comes closer to the projection surface 2 and grows as the device 1 is moved away. It is also possible to provide a separate button on the casing of the device 1 to selectively activate and deactivate the above-described zoom mode.

The distance between the device 1 and the projection surface 2 is measured by the range finder unit 14. This unit could - for example - determine the time delay of the laser beam that is used for the image projection and which is reflected back from the reflection surface 2. Other possibilities for the distance measurement could involve the use of additional distance measuring devices based on infra-red technology or ultra-sound technology.

Since the device 1 according to the present invention is intended to be held by a user's hand, it has to be taken into account, that the position or orientation of the device 1 will always somehow change. These small variations of the user's hand position which can e.g. result from trembling are usually not intended to initiate a change in the position of the viewport. Two ways will now be explained which integrate these unintended motions of the device 1 in the concept of the present invention.

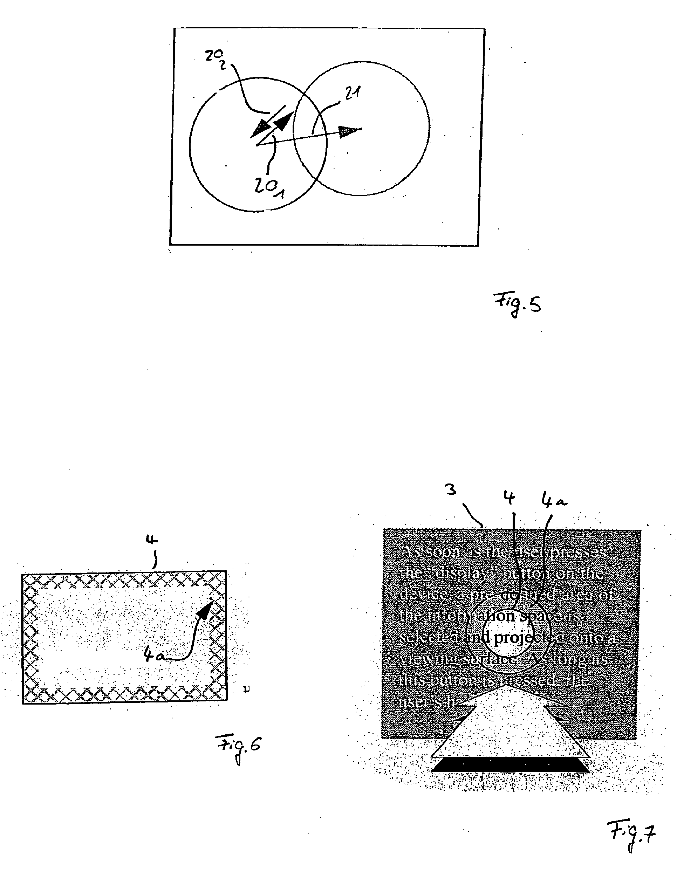

According to a first embodiment, small variations of the user's hand position are not interpreted to mean a change of the viewport. In this case, the variations in the position and/or orientation of the device 1 are compensated which means that the projected image is shifted into the opposite direction of the unintended hand motion in order to obtain a stable image. As shown in Fig. 5, the small change of the device position indicated by vector 20₁ is counter-balanced by shifting the projection direction by vector 20₂. As a result, the displayed image 4 rests on the same position on the projection surface 2.

Once however a certain threshold is overcome, the motion vector 21 captured from this hand gesture is used to move the viewport into the same direction as the gesture indicates. As a result, the contents of the data visualised on the surface 2 will change and the area 4' on the surface 2 is shifted as indicated by vector 21.

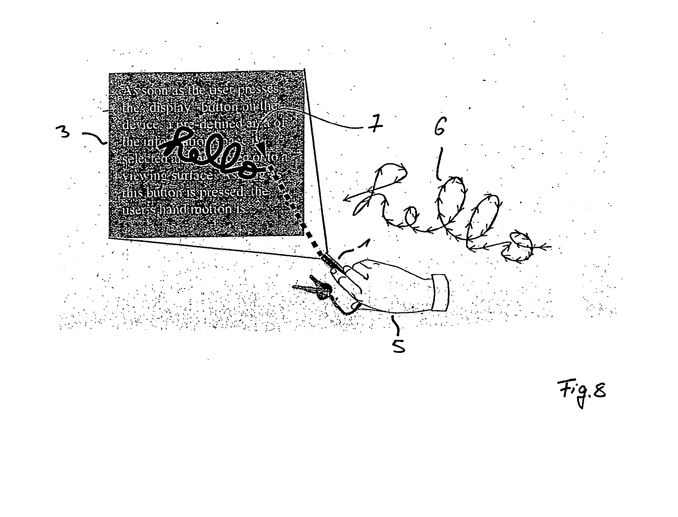

According to a second embodiment, all hand movements are interpreted to change the related viewport. No compensation effort is made to stabilise the projected picture. As a result, the border area of the projected picture will constantly change even if the user intends to keep the viewport fixed. Since this might result in distractions for the user and other persons watching the displayed information, the effect of constantly changing the picture is alleviated by applying a filter over a small part of the border area. As shown in Figs. 6 and 7, the filter has the consequence that the projected image 4 fades out within the border area 4a which means that the permanent change of the visualised picture cannot be observed by the user or other persons watching the projection surface 2. Commonly used techniques for achieving this fade-out-effect can be applied in this embodiment.

Up to now, the display device according to the present invention has only been used to navigate through and display data. However, the combination of motion tracking and the stable projection of images as used in the first alternative mentioned above can also be used to offer an attractive way of data entry with the device according to the present invention. This additional feature will now be explained with reference to Fig. 8.

In this further development of the device according to the present invention, the device 1 can be run in a specific write mode by pressing a dedicated button provided again on the outer surface of the casing of the device 1. In this write mode, all the hand movements of the user are faithfully tracked by the motion tracking sensors of the device 1 and used as a sample to re-construct the hand-writing of the user. The resulting strokes are transferred into data which are projected onto the projection surface 2 in order to visualise the motion of the user's hand.

In this write mode, the backdrop of the visualised data selected from the larger information space remains preferably stable by shifting the images into the opposite direction to the motion of the user's hand. As the user's scribbling portions lead the device to reach its maximum deflection range, the compensation motion stops and the right-most portions of the scribble lines disappear from the viewport. This would prompt the user to move back his hand into the original position and start the scribbling motion again from there. As an alternative, the protected display moves along with the hand motion once the scribbled information approaches the boarder of the display area.

The present invention thus provides a completely new solution for navigating through data sets and displaying at least a part of these data. The navigation commands correspond to the motion of the user's hand which allows a very convenient and intuitive navigation within the data.

## Claims

1. Handheld device (1) for navigating through and displaying data, said device comprising
projection means (10) for projecting a selected portion (4) of a larger data set (3) on a projection surface (2) and
data navigation means which select in response to the orientation, position and/or movement of the device (1) the data to be displayed by the projection means (10).

2. Device according to claim 1,
wherein said data navigation means comprise a gyroscope (16) for sensing the orientation, the position and/or the movement of the device (1).

3. Device according to claim 1 or 2,
wherein said data navigation means comprise an accelerometer (17) for sensing the orientation, the position and/or the movement of the device (1).

4. Device according to claim 1, 2 or 3,
wherein said data navigation means comprise a megnetic field sensor for sensing the orientation, the position and/or the movement of the device (1).

5. Device according to claim 1,
wherein said data navigation means comprise a camera (18) which records pictures of at least a part of the projection surface (2) wherein a change of the position and/or orientation of the device (1) is detected by a change of the pictures recorded by the camera (18).

6. Device according to claim 5,
wherein only the area surrounding the projected data (4) on the projection surface (2) is analysed in order to detect a change of the position and/or orientation of the device (1).

7. Device according to one of the preceding claims,
comprising further means (14) for measuring the distance between the device (1) and the projection surface (2) wherein the zoom or detail level of the projected data depends on the distance between the device (1) and the projection surface (2).

8. Device according to claim 7,
wherein said means (14) for measuring the distance between the device (1) and the projection surface (2) determine the time delay of a laser beam that is used for the image projection and which is reflected back from the reflection surface (2) to the device (1).

9. Device according to claim 7,
wherein said means (14) for measuring the distance between the device (1) and the projection surface (2) use infra-red ultra-sound technology.

10. Device according to one of the preceding claims,
wherein the selected data portion (3) projected onto the projection surface (2) is only changed if the change in the orientation, position and/or movement of the device (1) exceeds a predetermined threshold.

11. Device according to claim 10,
wherein changes in the orientation, position and/or movement of the device (1) which do not reach said predetermined threshold are compensated by the projection means (10).

12. Device according to one of the preceding claims,
wherein the border area (4a) of the selected data portion (3) displayed on the projection surface (2) is faded out.

13. Device according to one of the preceding claims,
wherein in a write mode of the device (1) the data portion (3) projected onto the projection surface (2) remains unchanged and the motion of the device (1) is tracked and projected onto the projection surface (2).

14. Device according to one of the preceding claims,
wherein said projection means (10) comprise

15. Method for navigating through and displaying data,
wherein a selected portion (4) of an larger data set (3) is projected onto a projection surface (2) by using a projection device (1) and
wherein the data to be projected onto the projection surface (2) are selected in response to the orientation, position and/or movement of the projection device (1).

16. Method according to claim 15,
wherein the zoom or detail level of the projected data depends on the distance between the device (1) and the projection surface (2).

17. Method according to claim 15 or 16,
wherein the selected data portion (3) projected onto the projection surface (2) is only changed if the change in the orientation, position and/or movement of the device (1) exceeds a predetermined threshold.

18. Method according to claim 17,
wherein changes in the orientation, position and/or movement of the device (1) which do not reach said predetermined threshold are compensated by the projection device (1).

19. Method according to one of the claims 15 to 18,
wherein a border area (4a) of the selected data portion (3) displayed on the projection surface (2) is faded out.

20. Method according to one of the claims 15 to 19,
wherein in a write mode of the device (1) the data portion (3) projected onto the projection surface (2) remains unchanged and the motion of the device (1) is tracked and projected onto the projection surface (2).
